(19) Europäisches Patentamt / European Patent Office / Office européen des brevets

(11) EP 3 088 442 A1

(12) EUROPEAN PATENT APPLICATION

(43) Date of publication:
**02.11.2016 Bulletin 2016/44**

(21) Application number: **15190072.7**

(22) Date of filing: **16.10.2015**

(51) Int Cl.:
***C08G 75/23** (2006.01)*
***C08G 65/40** (2006.01)*
***C08L 71/08** (2006.01)*
***C08L 81/06** (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.04.2015 US 201562155015 P**

(71) Applicant: **Solvay Specialty Polymers USA, LLC.**
**Alpharetta, GA 30005-3914 (US)**

(72) Inventors:
- **WU, Yuhong**
  **New York, NY New York 11367 (US)**
- **TAYLOR, Narmandakh**
  **CUMMING, GA Georgia 30028 (US)**
- **LEO, Vito**
  **1315 GLIMES (INCOURT) (BE)**
- **WARD, Christopher**
  **Sandy Springs, GA Georgia 30350 (US)**

(74) Representative: **Benvenuti, Federica et al**
**Solvay S.A.**
**Département de la Propriété Intellectuelle**
**Rue de Ransbeek, 310**
**1120 Bruxelles (BE)**

# (54) POLYMER COMPOSITIONS BASED ON A BIO-SOURCED POLYARYLENE ETHER SULFONE

(57) A polymer composition comprising:
(a) a polyether sulfone (PES-1) that contains at least one recurring unit ($R_a$) having formula ($R_a$-1):

($R_a$-1)

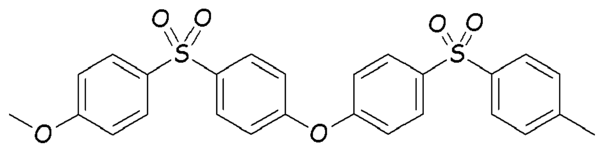

(b) a polyarylene ether sulfone (PAES-1) that comprises recurring units deriving from the incorporation of at least one 1,4:3,6-dianhydrohexitol [herein after diol (AA)] selected from the group consisting of isosorbide (1), isomannide (2) and isoidide (3):

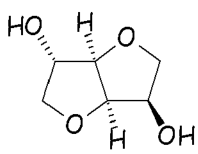
(1)

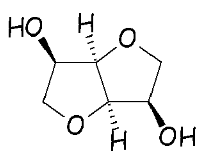
(2)

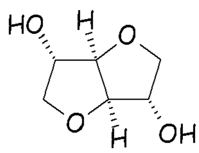
(3)

(PES-1) and (PAES-1) are completely miscible and allows obtaining transparent compositions (C), which also possess high strength and stiffness and are suitable for the manufacture of a variety of shaped articles.

EP 3 088 442 A1

## Description

### Technical Field

The present invention relates to polymer compositions comprising a bio-sourced polymer and a polyether sulfone (PES), to methods for their manufacture and to their use in the manufacture of shaped articles.

### Background

Polyether sulfones (PES) are thermoplastic polymers comprising -aryl-$SO_2$-aryl- moieties, which are typically manufactured by polycondensation reaction of a bis-(halodiphenyl) sulfone with a diphenol. PES are used for a variety of industrial applications, including, but not limited to, the manufacture of articles for medical applications and for automotive applications and the manufacture of flame retardant compositions.
Among the requirements of articles made from PES, especially medical articles, are transparency, high strength and stiffness and there is a continuing need for new polymer materials satisfying such requirements.
Furthermore, in the polymer industry, there is a continuing need to provide environmentally friendly materials.

### Description of the invention

The applicant has now surprisingly found out that, despite their structural differences, certain polyethersulfones (PES) are miscible with polyarylene ether sulfones (PAES) that comprise 1,4:3,6-dianhydrohexitol sugar diols units and that the mixtures (or blends) of such polymers are transparent and are endowed with good mechanical properties, in particular hardness and stiffness, which makes them useful for all industrial applications wherein transparency and good mechanical performances are required.
In greater detail, the present invention relates to compositions [compositions (C)] comprising:

(a) a polyether sulfone (PES-1) that contains at least one recurring unit ($R_a$) having formula ($R_a$-1):

($R_a$-1)

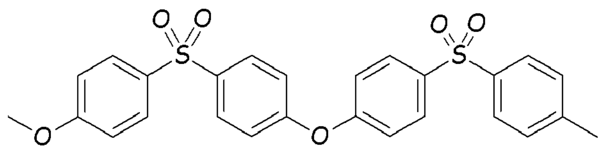

(b) a polyarylene ether sulfone (PAES-1) that comprises recurring units deriving from the incorporation of at least one 1,4:3,6-dianhydrohexitol [herein after diol (AA)] selected from the group consisting of isosorbide (1), isomannide (2) and isoidide (3):

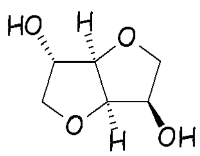
(1)

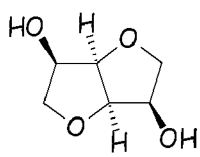
(2)

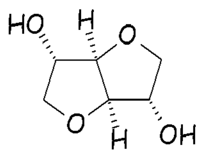
(3)

The invention further relates to methods for the manufacture of compositions (C) and to the use of compositions (C) for the manufacture of shaped articles.
For the sake of clarity, in the following application:

- any reference to general formulae of (PES-1) and (PAES-1) is intended to include each specific formula falling within the respective general formula, unless indicated otherwise;
- the indeterminate article "a" in expressions like "a (PES-1)", "a PAES-1", etc... is intended to mean "one or more", or "at least one" unless indicated otherwise;
- the use of brackets "( )" before and after names, symbols or numbers identifying formulae or parts of formulae, e.g.

composition (C), recurring unit ($R_a$), etc..., has the mere purpose of better distinguishing that name, symbol or number from the rest of the text; thus, said parentheses could also be omitted;

- when numerical ranges are indicated, range ends are included;
- the term "halogen" includes fluorine, chlorine, bromine and iodine, unless indicated otherwise;
- the adjective "aromatic" or "aryl" denotes any cyclic moiety having a number of $\pi$ electrons equal to 4n+2, wherein n is 0 or any positive integer;
- the term "method" is to be regarded as a synonym of "process" and *vice versa.*

**Polyether sulfones (PES-1)**

Polyether sulfones (PES-1) for the manufacture of compositions (C) according to the present invention are aromatic sulfone polymers wherein at least 50% moles of the recurring units comply with formula ($R_a$-1) as defined above.

Preferably, at least 60% moles, more preferably at least 70% moles, still more preferably at least 80% moles and most preferably at least 90% moles of the recurring units of the (PES-1) are recurring units ($R_a$-1) as defined above.

Should polymer (PES-1) contain other recurring units than units ($R_a$-1), such other units are typically selected from those complying with formula ($R_a$-2):

$$(R_a\text{-}2)\ -Ar^1-(T'-Ar^2)_n-O-Ar^3-SO_2-[Ar^4-(T-Ar^2)_n-SO_2]_m-Ar^5-O-$$

wherein:

- $Ar^1$, $Ar^2$, $Ar^3$, $Ar^4$, and $Ar^5$, equal to or different from each other at each occurrence, are independently an aromatic moiety;
- T and T', equal to or different from each other at each occurrence, are independently a bond or a divalent group optionally comprising one or more than one heteroatom; preferably T and T' are selected from the group consisting of a bond, $-CH_2-$, $-C(O)-$, $-C(CH_3)_2-$, $-C(CF_3)_2-$, $-C(=CCl_2)-$, $-SO_2-$, $-C(CH_3)(CH_2CH_2COOH)-$, and a group of formula:

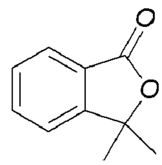

and

n and m, equal to or different from each other, are independently zero or an integer of 1 to 5.

Recurring units ($R_a$-2) are preferably selected from those of formulae (S-A) - (S-D):

(S-A)

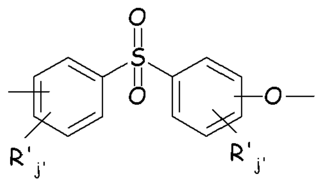

(S-B)

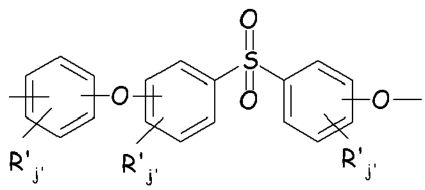

(S-C)

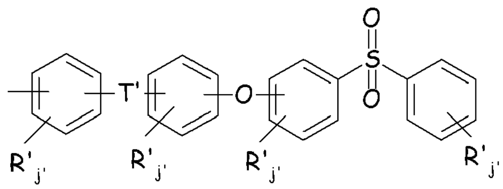

(S-D)

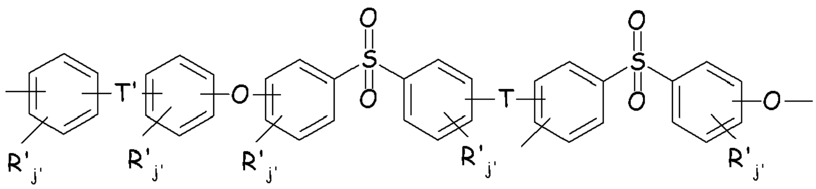

wherein:

- each of R’, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j’ is zero or is an integer from 0 to 4, with the proviso that, in unit (S-A), at least one of j’ is not 0;
- T and T’, equal to or different from each other, are as defined above.

The aromatic sulfone polymer (PES-1) has typically a glass transition temperature of advantageously at least 150°C, preferably at least 160°C, more preferably at least 175°C.
Polymer (PES-1) that can be conveniently used for the manufacture of compositions (C) are commercially available and can be prepared according to methods known in the art.
Excellent results are provided by compositions (C) wherein the (PES-1) contains no recurring units other than recurring units ($R_a$-1) as defined above. This polymer is commercially available as VERADEL® PES from
Solvay Specialty Polymers USA, L.L.C.

**Polyarylene ether sulfones (PAES-1)**

Polyarylene ether sulfones (PAES-1) for the manufacture of compositions (C) according to the present invention include any polymer of which more than 30% moles of the recurring units are recurring units ($R_b$) of formula:

$$(R_b)\ -Ar^{*1}-SO_2-[Ar^{*2}-(T^*-Ar^{*3})_{n^*}-SO_2]_{m^*}-Ar^{*4}-E-$$

wherein

- each of Ar*[1], Ar*[2], Ar*[3] and Ar*[4], equal to or different from each other at each occurrence, is an aromatic moiety;
- n* and m*, equal to or different from each other, are independently zero or an integer of 1 to 5;
- T* is a bond or a divalent group optionally comprising one or more than one heteroatom; preferably T* is selected from the group consisting of a bond, $-CH_2-$, $-C(CH_3)_2-$ , $-C(CF_3)_2-$, $-C(=CCl_2)-$, - $C(CH_3)(CH_2CH_2COOH)-$, and a group of formula:

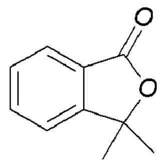

and
- E is a 1,4:3,6-dianhydrohexitol sugar diols unit selected from one or more of formulae (E-1) - (E-3):

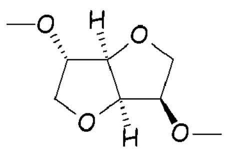
(E-1)

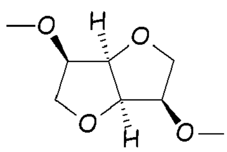
(E-2)

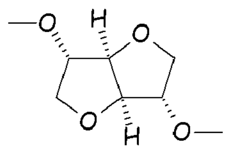
(E-3)

Preferred aromatic moieties Ar*[1] - Ar*[4] have the following structures:

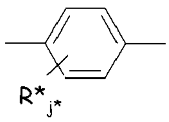

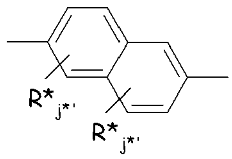

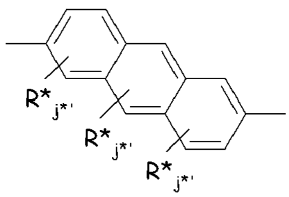

wherein :

- each R* is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j* is zero or an integer of 1 to 4 and j*' is zero or an integer of 1 to 3.

Preferred polymers (PAES-1) to be used in compositions (C) according to the present invention comprise recurring units ($R_b$) independently selected from one or more of those of formulae ($R_b$-1) and ($R_b$-2):

($R_b$-1)

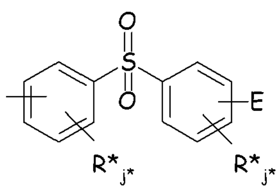

($R_b$-2)

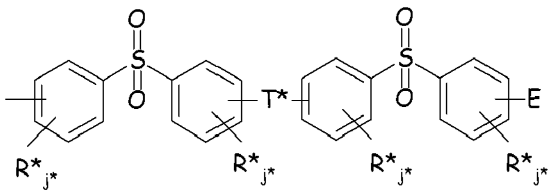

wherein:

- each of R*, equal to or different from each other, is as defined above;
- j* is as defined above;
- T* is as defined above and is preferably selected from the group consisting of a bond, $-CH_2-$, -C(O)-, $-C(CH_3)_2-$,$-C(CF_3)_2-$, $-C(=CCl_2)-$, - $C(CH_3)(CH_2CH_2COOH)-$, $-SO_2-$, phenylene and a group of formula:

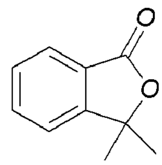

and

- E is a 1,4:3,6-dianhydrohexitol sugar diol unit selected from one or more of formulae (E-1) - (E-3) as defined above.

Recurring units ($R_b$-1) and ($R_b$-2) can be each present alone or in admixture.

More preferred (PAES-1) polymers are those comprising recurring units of formulae ($R_b$-1) and ($R_b$-2) wherein E is a 1,4:3,6-dianhydrohexitol sugar diol unit of formula (E-1) [herein after also referred to as isosorbide unit (E-1)], optionally in combination with one or more ($R_b$-1) and ($R_b$-2) units wherein E is a 1,4:3,6-dianhydrohexitol sugar diol unit of formula (E-2) and/or (E-3) [herein after also referred to as isomannide and isoidide units (E-2) and (E-3) respectively].

Most preferred (PAES-1) polymers are those comprising recurring units of formula ($R_b$-1) wherein E is an isosorbide unit (E-1), optionally in combination with recurring units ($R_b$-1) wherein E is an isomannide unit of formula (E-2) and/or an isoidide unit of formula (E-3).

In recurring units ($R_b$-1) and ($R_b$-2), the respective respective phenylene moieties may independently have 1,2-, 1,4- or 1,3- linkages to the other moieties different from R* in the recurring units. Preferably, said phenylene moieties have 1,3- or 1,4- linkages, more preferably they have 1,4-linkages. Still, in recurring units ($R_b$-1) and ($R_b$-2), j* is at each occurrence zero, that is to say that the phenylene moieties have no other substituents than those enabling linkage in the main chain of the polymer.

Polymers (PAES-1) can be manufactured by reaction of at least one 1,4:3,6-dianhydrohexitol [diol (AA)] as defined above
with

- at least one dihaloaryl compound [herein after dihalo (BB)] of formula (S):

$$X\text{-}Ar^{*1}SO_2\text{-}[Ar^{*2}\text{-}(T^{*}\text{-}Ar^{*3})_{n^*}\text{-}SO_2]_{m^*}\text{-}Ar^{*4}\text{-}X' \qquad \text{formula (S)}$$

wherein:

X and X', equal to or different from each other, are halogens selected from F, Cl, Br, I; preferably Cl or F; and

$Ar^{*1}$, $Ar^{*2}$, $Ar^{*3}$, $Ar^{*4}$, T*, n* and m* are as defined above.

A convenient method for manufacturing polymers (PAES-1) is disclosed in WO 2014/072473 (SOLVAY SPECIALTY POLYMERS USA) 5/15/2014 , filed November 8, 2013, and incorporated by reference herein.

Polymer (PAES-1) may optionally comprise further recurring units selected from one or more of:

- recurring units ($R_{A'A'}$), deriving from the incorporation of at least one dihydroxyl compound [diol (A'A')] different from diol (AA);
- recurring units ($R_{B'B'}$), deriving from the incorporation of at least one dihaloaryl compound [dihalo (B'B')] different from dihalo (BB);
- recurring units ($R_{A'B'}$), deriving from the incorporation of at least one hydroxyl-halo compound [hydro-halo (A'B')];
- recurring units ($R_c$) complying with formula (S1):

$$(S1)\ -Ar^5-(T^{S1}-Ar^6)_q-O-Ar^7-SO_2-[Ar^8-(T^{S1'}-Ar^9)_q-SO_2]_p-Ar^{10}-O-$$

wherein:

$Ar^5$, $Ar^6$, $Ar^7$, $Ar^8$ and $Ar^9$, equal to or different from each other and at each occurrence, are independently an aromatic moiety;

- $T^{S1}$ and $T^{S1'}$, equal to or different from each other at each occurrence, are independently a bond or a divalent group optionally comprising one or more than one heteroatom; preferably $T^{S1}$ and $T^{S1'}$ are selected from the group consisting of a bond, $-CH_2-$, $-C(O)-$,$-C(CH_3)_2-$, - $C(CF_3)_2-$, $-C(=CCl_2)-$, $-C(CH_3)(CH_2CH_2COOH)-$, $-SO_2-$, and a group of formula:

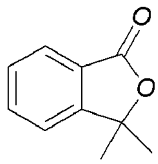

- q and p, equal to or different from each other, are independently zero or an integer of 1 to 5.

Recurring units ($R_c$) can be notably selected from the group consisting of those of formulae (S1-A) to (S1-D) herein below:

(S1-A)

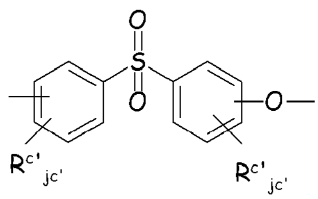

(S1-B)

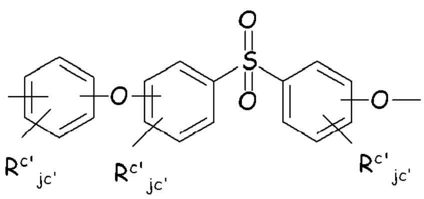

(S1-C)

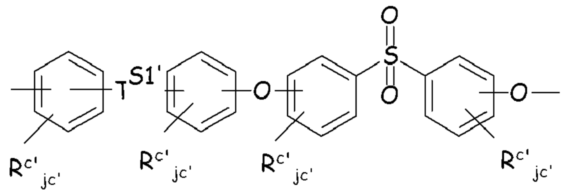

(S1-D)

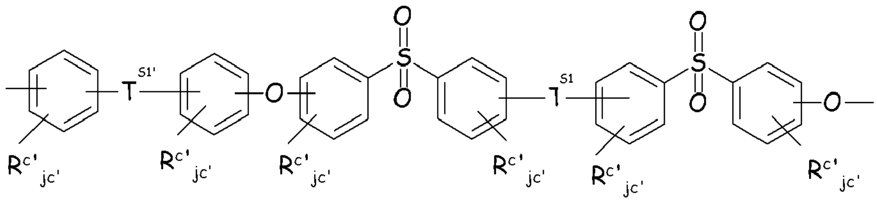

wherein:

- each of $R^{c'}$, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- jc' is zero or is an integer from 0 to 4;
- $T^{S1}$ and $T^{S1'}$ are as defined above.

In recurring unit (S1-C) - (S1-D), the respective phenylene moieties may independently have 1,2-, 1,4- or 1,3- linkages to the other moieties different from R' in the recurring unit. Preferably, said phenylene moieties have 1,3- or 1,4- linkages, more preferably they have 1,4- linkages. Still, in recurring units (S1-C) - (S1-D), $j^{c'}$ is at each occurrence zero, that is to say that the phenylene moieties have no other substituents than those enabling linkage in the main chain of the polymer.

Polymer (PAES-1) suitable for use in compositions (C) according to the present application comprise recurring units of formula ($R_b$) as above detailed in an amount of at least 30% moles, preferably 35% moles, more preferably 40 % moles, even more preferably at least 50% moles, with respect to all recurring units of polymer (PAES-1).

According to certain preferred embodiments, more than 70, and more preferably more than 85% moles of the recurring units of the polymer (PAES-1) are recurring units ($R_b$), as above detailed, the complement to 100% moles being generally recurring units ($R_c$) as described.

Methods for the manufacture of polymers (PAES-1) comprising further recurring units in addition to units ($R_b$) are also disclosed in the aforementioned WO 2014/072473.

Preferably, compositions (C) according to the present invention comprise polymers (PAES-1) consisting only of recurring units ($R_b$) as described above, preferably recurring units ($R_b$-1) in which (E) is an isosorbide unit of formula (E-1) and wherein the phenylene units have 1,4- linkages.

The polymers (PAES-1) for use in compositions (C) according to the present invention have in general a weight average molecular weight of at least 20,000, preferably at least 30,000, more preferably at least 40,000.

The weight average molecular weight ($M_w$) and the number average molecular weight ($M_n$) can be estimated by gel-permeation chromatography (GPC) using ASTM D5296 calibrated with polystyrene standards.

The weight average molecular weight ($M_w$) is :

$$M_w = \frac{\sum M_i^2 \cdot N_i}{\sum M_i \cdot N_i}$$

The number average molecular weight ($M_n$) :

$$M_n = \frac{\sum M_i \cdot N_i}{\sum N_i}$$

,

and the polydispersity index (PDI) is hereby expressed as the ratio of weight average molecular weight ($M_w$) to number average molecular weight (Mn).

Polymers (PAES-1) for use in compositions (C) according to the present invention generally have a polydispersity index of less than 2.5, preferably of less than 2.4, more preferably of less than 2.2. This relatively narrow molecular weight distribution is representative of an ensemble of molecular chains with similar molecular weights and substantially free from oligomeric fractions, which might have a detrimental effect on polymer properties.

Polymer (PAES-1) for use in compositions (C) according to the present invention advantageously possess a glass transition temperature of at least 200°C, preferably 210°C, more preferably at least 220°C. Glass transition temperature (Tg) is generally determined by differential scanning calorimetry (DSC), according to ASTM D3418.

**Compositions (C), manufacture and uses thereof**

Compositions (C) according to the present invention contain a (PES-1) and a (PAES-1) polymer as defined above in a weight ratio of from 10:90 to 90:10, preferably from 30:70 to 70:30, more preferably of 50:50.

Further to a (PES-1) and a (PAES-1) polymer as defined above, compositions (C) may comprise additional ingredients, for example viscosity modifiers, lubricants, colorants, fillers, thermal stabilizers, UV stabilizers, antioxidants, flame retardants, conductivity additives and the like, with the proviso that said other ingredients are inert and do not impair the transparency and the mechanical properties of the compositions. Said other ingredients can be contained in an amount ranging from 0.001% to 70.0 %wt with respect to the weight of the composition. A person skilled in the art will be able to select the kind and amount of said additional ingredients on the basis of common general knowledge.

In a preferred embodiment, compositions (C) contain only a (PES-1) polymer and a (PAES-1) polymer as defined above.

Compositions (C) can be manufactured by blending a (PES-1) and a (PAES-1) as defined above in selected amounts and, optionally, additional ingredients as defined above, followed by processing according to methods known in the art, such as melt processing (including injection moulding, extrusion moulding, compression moulding, blow moulding and rotational moulding) and solution processing.

As it will be clearer from the description of embodiments reported in the following section, despite their structural differences, (PES-1) and (PAES-1) polymers have been surprisingly found to be completely miscible, as demonstrated by the fact that all tested compositions (C) showed a single Tg and that no phase separation occurred. All compositions were transparent and showed a lower processing temperature than that of each single polymer.

Furthermore, the results of mechanical tests showed that compositions (C) provide a good balance between the mechanical properties of the (PES-1) and (PAES-1) polymers. In particular, the composition showed improved mechanical properties with respect to those of (PES-1) alone.

Compositions (C) also have an improved UV-stability with respect to that of (PES-1).

Thanks to such advantages, compositions (C) can be conveniently used for the manufacture of shaped articles like membranes, films and sheets and three-dimensional moulded parts wherein it is necessary to combine good mechanical properties and transparency.

Non-limitative examples of shaped articles which can be manufactured from compositions (C) using different processing technologies are generally selected from the group consisting of melt processed films, solution processed films (porous and non-porous films, including solution casted membranes, and membranes from solution spinning), melt process monofilaments and fibers, solution processed monofilaments, hollow fibers and solid fibers, and injection and compression molded objects.

As far as membranes are concerned, compositions (C) of the invention are particularly suitable for manufacturing membranes intended for contact with aqueous media, including body fluids; thus, shaped articles which can be manufactured from compositions (C) are advantageously membranes for bioprocessing and medical filtrations, including hemodialysis membranes, membranes for food and beverage processing, membranes for waste water treatment and membranes for industrial process separations involving aqueous media. From an architectural perspective, membranes manufactured from compositions (C) may be provided under the form of flat structures (e.g. films or sheets), corrugated structures (such as corrugated sheets), tubular structures, or hollow fibers; as far as pore size is concerned, a full range of membranes (non-porous and porous, including for microfiltration, ultrafiltration, nanofiltration, and reverse osmosis) can be advantageously manufactured from compositions (C); pore distribution can be isotropic or anisotropic.

Shaped articles manufactured from compositions (C) can be, as above mentioned, under the form of films and sheets. These shaped articles are particularly useful as specialized optical films or sheets, and/or suitable for packaging.

Further, shaped articles manufactured from compositions (C) can be three-dimensional moulded parts. Among fields of use wherein such injection moulded parts can be used, mention can be made of healthcare field, in particular medical and dental applications, wherein shaped articles made from compositions (C) of the invention can advantageously be used for replacing metals, glass and other traditional materials in single-use and reusable instruments and devices.

Thus, a further object of the present invention are shaped articles manufactured from compositions (C).

Another object of the invention is a method for coating substrates comprising using compositions (C). In particular, compositions (C) can be applied to metals in order to prevent corrosion.

The choice of substrates is not particularly limited. Such coatings may be useful for protecting substrates such as notably metals such as steel, in particular stainless steel, aluminium, copper, and other metals in applications such as food and beverage can coatings, marine-hull protection, aerospace, automotive, wire coating, and electronics and plastics. The composition (C) coating could also be applied to other substrates including glass and carbon fiber cloths, for example, that could be used, after the removal of the solvent, as thermoplastic composites useful in aerospace and automotive applications to replace metal parts.

According to one embodiment of the invention, the method comprises dissolving a composition (C) as defined above in at least one liquid medium, wherein said composition (C) is at least partially dissolved in a liquid medium.

For the purpose of the invention, the term "liquid medium" is intended to denote a medium which is available in liquid state at a temperature of 25° C and at atmospheric pressure.

By the term "dissolved" is meant that the composition (C) is present in solubilised form in the liquid medium.

In this embodiment of the present invention, composition (C) in said liquid medium is substantially in a dissolved form, that is to say that more than 90 % wt, preferably more than 95% wt, more preferably than 99 % wt is dissolved in the liquid medium.

The liquid medium according to this embodiment preferably comprises a solvent selected among active solvents for polymers (PES-1) and (PAES-1). An active solvent for such polymers is a solvent which is able to dissolve at least 5% wt of polymers (PES-1) and (PAES-1) (with respect to the total weight of the final solution) at a temperature of 25°C and at atmospheric pressure.

Active solvents which can be used in this embodiment are notably dimethylformamide (DMF), dimethylacetamide (DMAC), dimethylsulfoxide (DMSO), N-methyl-2-pyrrolidone (NMP) and the like.

The liquid medium of this embodiment can further comprise one or more of intermediate and/or latent solvents for the polymers (PES-1) and (PAES-1). Nevertheless, the liquid medium will preferably comprise a major amount of the active solvent, most preferably consist essentially of the active solvent. Liquid media might comprise impurities or other ingredients (e.g. additives, stabilizers...) that do not significantly modify the properties of the liquid medium.

The liquid composition (C) comprising polymers (PES-1) and (PAES-1) [herein after "composition ($C_L$)"] used in this embodiment advantageously comprises polymers (PES-1) and (PAES-1), as described above, in an amount equal to or greater than 0.5 wt. %, preferably equal to or greater than 5 wt. %, more preferably equal to or greater than 15 wt. %, most preferably equal to or greater than 20 wt. %, relative to the total weight of the liquid composition.

If desired, composition ($C_L$) can further comprise other conventional ingredients selected from those listed above, with the proviso that said other ingredients are inert and not interact substantially with the (PES-1) and (PAES-1) polymers.

Coating techniques are not particularly limited. All standard coating techniques suitable for coating compositions comprising a liquid medium can be suitable to this aim. Standard coating techniques include, but are not limited to, film coating, spray coating, curtain coating, casting, coil coating, roller coating, gravure coating, reverse roll coating, dip coating, spray coating, blade coating and the like.

Techniques particularly adapted for coating substrates with composition ($C_L$) are notably roller coating, dip coating, spray coating, blade coating.

The methods for coating substrates described herein comprise drying the layer of liquid composition ($C_L$) coated onto the substrate. Drying enables substantial removal of the liquid medium. Drying can be effected at any temperatures, from room temperature onward.

Such methods preferably comprise submitting the layer comprising composition ($C_L$) to a thermal treatment at a temperature of at least 150°C, preferably at least 200°C, more preferably from 200 to 350°C. Thermal treatment can be effected simultaneously, or alternatively, or further in addition to drying.

Should the disclosure of any patents, patent applications, and publications which are incorporated herein by reference conflict with the description of the present application to the extent that it may render a term unclear, the present description shall take precedence.

The invention will be disclosed in greater detail by means of non-limiting examples in the following section.

## EXPERIMENTAL SECTION

### Materials and methods

Veradel® A201 PES (PES-1 a) and Veradel® (PES-1 b) 3000P are commercially available from Solvay Specialty Polymers USA, LLC.

(PAES-1) polymers (PAES-1 a) and (PAES-1b) were manufactured according to the method disclosed in WO 2014/072473, with the difference that the molar ratio isosorbide:difluorodiphenyl sulfone:$K_2CO_3$ was 1.00:1.01:1.25.

DSC analyses were carried out according to ASTM D3418.

Transmission electron microscopy (TEM) analyses were carried out with a Philips CM12 Transmission Electron Microscrope. And all specimens were sectioned with a diamond knife into a thickness of ~50nm, using ultra microtome technique by Leica EM UC7 & EM FC Ultramicrotome.

### Preparation of PAES-1a/PES-1a compositions and tests

PAES-1a/PES-1a compositions were prepared by mixing Veradel® A201 PES and the PAES-1a prepared according to WO 2014/072473 by weight percent, as indicated in Table 1 below. The compositions and each single polymer were extruded by DSM Xplore® twin screw extruder under the following processing conditions:

- barrel temperature = 360°C;
- RPM=30-10;
- residence time: about 2 min.

After extrusion, each molten polymer and the PAES-1 a/PES-1 a compositions were collected for DSC and TEM to evaluate the miscibility of the two polymers. All extrudates were transparent.

DSC runs were carried out to determine the glass transition temperature of the PAES-1a/PES-1a compositions and of the pure PAES-1a and PES-1a polymers. DSC thermograms showed a single glass transition temperature in the compositions. Also TEM micrographs were taken from the polymer compositions and all micrographs showed no phase separation.

Table 1 reports the results of the DSC analyses (Tg) on each polymer (samples 1a and 6a) and on each tested composition (C) (samples 2a - 5a).

**Table 1 - Results of DSC analyses**

| Sample | %wt PES-1a | %wt PAES-1a | Tg °C |
|---|---|---|---|
| 1a | 100 | 0 | 227.2 |
| 2a | 90 | 10 | 227.7 |
| 3a | 70 | 30 | 229.6 |
| 4a | 50 | 50 | 231.5 |
| 5a | 30 | 70 | 233.0 |
| 6a | 0 | 100 | 237.8 |

### Preparation of a PAES-1 b/PES-1b composition and tests

A PAES-1 b/PES-1 b composition was prepared from Veradel® 3000P and PAES-1b, following the procedure described above for compositions of PAES-1 a/PES-1 a, then the single PAES-1 b and PES-1b polymers were submitted to extrusion under the same conditions as above. DSC analysis was performed in order to determine the glass transition temperature for the PAES-1 b/PES-1 b compositions and for the pure PAES-1 b and PES-1 b polymers. DSC thermograms showed a single glass transition temperature for the compositions. Also, SEM micrographs were taken from the extrudates of the compositions, with all micrographs showing no phase separation in the blends.

Table 2 reports the results of the DSC analyses (Tg) on each polymer (samples 1b and 5b) and on each tested composition (C) (samples 2b - 4b), while Table 3 reports the results of mechanical tests.

**Table 2 - Results of DSC analyses**

| Sample | %wt PES-1 b | %wt PAES-1b | Tg °C |
|---|---|---|---|
| 1b | 100 | 0 | 225.1 |
| 2b | 90 | 10 | 226.7 |
| 3b | 60 | 40 | 227.7 |
| 4b | 30 | 70 | 228.6 |
| 5b | 0 | 100 | 231.9 |

**Table 3 - Results of mechanical tests**

| Sample | Izod complete break (Ft-lb/in) | Modulus of elasticity (ksi) | Tensile strength at break (Psi) |
|---|---|---|---|
| 1b | 1.3 | 342 | 8,940 |
| 2b | 1.47 | 347 | 9,380 |
| 3b | 1.94 | 352 | 9,360 |
| 4b | 2.27 | 358 | 10,000 |
| 5b | 2.54 | 371 | 11,000 |

## Claims

**1.** A composition comprising:

(a) a polyether sulfone (PES-1) that contains at least one recurring unit ($R_a$) having formula ($R_a$-1):

($R_a$-1)

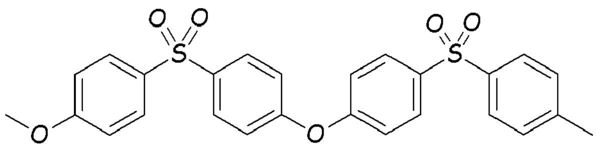

(b) a polyarylene ether sulfone (PAES-1) that comprises recurring units from the incorporation of at least one 1,4:3,6-dianhydrohexitol [herein after diol (AA)] selected from the group consisting of isosorbide (1), isomannide (2) and isoidide (3):

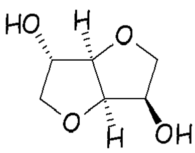

(1)

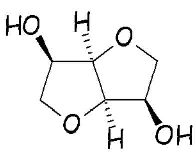

(2)

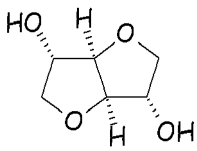

(3)

.

**2.** The composition of claim 1, wherein (PES-1) further comprises recurring units ($R_a$-2):

$$(R_a\text{-}2)\ \text{-}Ar^1\text{-}(T'\text{-}Ar^2)_n\text{-}O\text{-}Ar^3\text{-}SO_2\text{-}[Ar^4\text{-}(T\text{-}Ar^2)_n\text{-}SO_2]_m\text{-}Ar^5\text{-}O\text{-}$$

wherein:

- $Ar^1$, $Ar^2$, $Ar^3$, $Ar^4$, and $Ar^5$, equal to or different from each other at each occurrence, are independently an aromatic moiety;
- T and T', equal to or different from each other at each occurrence, are independently a bond or a divalent group optionally comprising one or more than one heteroatom; preferably T and T' are selected from the group consisting of a bond, $-CH_2-$, $-C(O)-$, $-C(CH_3)_2-$, $-C(CF_3)_2-$, $-C(=CCl_2)-$, $-SO_2-$, - $C(CH_3)(CH_2CH_2COOH)-$, and a group of formula:

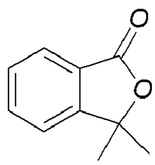

and
n and m, equal to or different from each other, are independently zero or an integer of 1 to 5.

**3.** The composition of claim 1, wherein (PES-1) consists only of recurring units ($R_a$-1).

**4.** The composition of claim 1, wherein (PAES-1) is a polymer of which more than 30% moles of the recurring units are recurring units ($R_b$):

$$(R_b)\ -Ar^{*1}-SO_2-[Ar^{*2}-(T^*-Ar^{*3})_{n^*}-SO_2]_{m^*}-Ar^{*4}-E-$$

wherein:

- each of $Ar^{*1}$, $Ar^{*2}$, $Ar^{*3}$ and $Ar^{*4}$, equal to or different from each other at each occurrence, is an aromatic moiety;
- n* and m*, equal to or different from each other, are independently zero or an integer of 1 to 5;
- T* is a bond or a divalent group selected from a bond, $-CH_2-$, $-C(CHs)_2-$ , - $C(CF_3)_2-$, $-C(=CCl_2)-$, $-C(CH_3)(CH_2CH_2COOH)-$, and a group of formula:

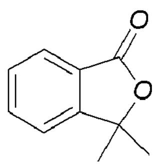

and
- E is a 1,4:3,6-dianhydrohexitol sugar diols unit selected from one or more of formulae (E-1) - (E-3):

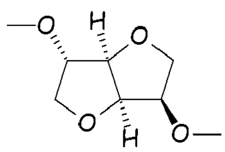
(E-1)

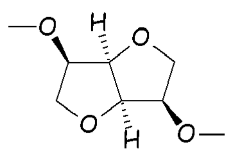
(E-2)

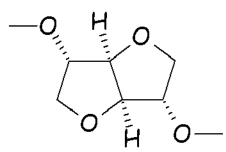
(E-3)

**5.** The composition of claim 4, wherein recurring units ($R_b$) are independently selected from one or more of those of formulae ($R_b$-1) and ($R_b$-2):

$(R_b\text{-}1)$

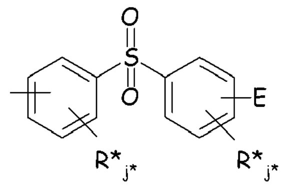

$(R_b\text{-}2)$

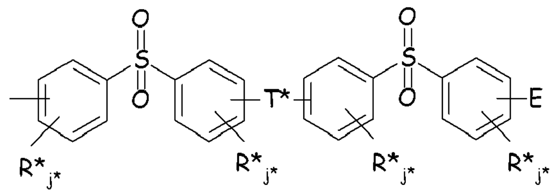

wherein:

- each R* is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j* is zero or an integer of 1 to 4 and j*' is zero or an integer of 1 to 3.
- T* and E are as defined in claim 4.

**6.** The composition of claim 4 wherein (PAES-1) further comprises recurring units selected from one or more of:

- recurring units ($R_{A'A'}$), deriving from the incorporation of at least one dihydroxyl compound [diol (A'A')] different from diol (AA);
- recurring units ($R_{B'B'}$), deriving from the incorporation of at least one dihaloaryl compound [dihalo (B'B')] different from dihalo (BB);
- recurring units ($R_{A'B'}$), deriving from the incorporation of at least one hydroxyl-halo compound [hydro-halo (A'B')];
- recurring units ($R_c$) complying with formula (S1):

$$(S1)\ -Ar^5-(T^{S1}-Ar^6)_q-O-Ar^7-SO_2-[Ar^8-(T^{S1'}-Ar^9)_q-SO_2]_p-Ar^{10}-O-$$

wherein:
- $Ar^5$, $Ar^6$, $Ar^7$, $Ar^8$, and $Ar^9$, equal to or different from each other and at each occurrence, are independently an aromatic moiety;
- $T^{S1}$ and $T^{S1'}$, equal to or different from each other at each occurrence, are independently a bond or a divalent group selected from a bond, $-CH_2-$, $-C(O)-$,$-C(CH_3)_2-$, $-C(CF_3)_2-$, $-C(=CCl_2)-$, $-C(CH_3)(CH_2CH_2COOH)-$, $-SO_2-$, and a group of formula:

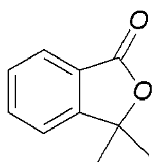

- q and p, equal to or different from each other, are independently zero or an integer of 1 to 5.

**7.** The composition of claim 5 wherein (PAES-1) comprises only recurring units ($R_b$-1) wherein E is a unit of formula (E-1).

**8.** The composition of claim 7 wherein the phenylene moieties in (PAES-1) have 1,4-linkages.

**9.** The composition of claim 7, wherein j* is at each occurrence 0.

**10.** The compositions of any one of claims 1 to 9 wherein the (PES-1) and the (PAES-1) polymers are contained in a weight ratio of from 10:90 to 90:10.

**11.** A shaped article manufactured from the compositions of any one of claims 1 to 10.

**12.** The shaped article of claim 11, said article being selected from films, membranes, sheets and three-dimensional moulded parts.

**13.** A method of forming the shaped article of claims 11 and 12 which comprises submitting the composition of any one of claims 1 to 10 to melt processing and/or solution processing.

**14.** A method of coating a substrate, said method comprising dissolving the composition of any one of claims 1 to 10 in at least one liquid medium and applying the composition on to a substrate.

Europäisches Patentamt
European Patent Office
Office européen des brevets

# EUROPEAN SEARCH REPORT

Application Number
EP 15 19 0072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 738 219 A1 (SOLVAY SPECIALTY POLYMERS USA [US]) 4 June 2014 (2014-06-04)<br>* paragraph [0001] - paragraph [0151]; claims 1-14; examples *<br>----- | 1-14 | INV.<br>C08G75/23<br>C08G65/40<br>C08L71/08<br>C08L81/06 |
| Y | SABER CHATTI ET AL: "Poly(ether sulfone) of Isosorbide, Isomannide and Isoidide", HIGH PERFORMANCE POLYMERS, INSTITUTE OF PHYSICS PUBLISHING, BRISTOL, GB, vol. 21, no. 1, 1 February 2009 (2009-02-01), pages 105-118, XP008151327, ISSN: 0954-0083, DOI: 10.1177/0954008308088296<br>* page 105 - page 118 *<br>----- | 1-14 | |
| Y | KRICHELDORF H C ET AL: "New Polymer Syntheses LXXXII", JOURNAL OF POLYMER SCIENCE PART A: POLYMER CHEMISTRY, JOHN WILEY & SONS, INC, US, vol. 33, 1 January 1995 (1995-01-01), pages 2667-2671, XP002674685, ISSN: 0887-624X<br>* page 2667 - page 2671 *<br>----- | 1-14 | TECHNICAL FIELDS SEARCHED (IPC)<br>C08G<br>C08L |
| Y | WO 2014/095794 A2 (SOLVAY SPECIALTY POLYMERS USA [US]) 26 June 2014 (2014-06-26)<br>* paragraph [0001] - paragraph [0057]; claims 1-15; examples *<br>----- | 1-14 | |
| Y | WO 2014/072473 A2 (SOLVAY SPECIALTY POLYMERS USA [US]) 15 May 2014 (2014-05-15)<br>* page 1, line 5 - page 24, line 34; claims 1-16; examples *<br>-----<br>-/-- | 1-14 | |

1

The present search report has been drawn up for all claims

| Place of search | Date of completion of the search | Examiner |
|---|---|---|
| The Hague | 29 April 2016 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 19 0072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/023997 A1 (SOLVAY SPECIALTY POLYMERS USA [US]; SOLVAY [BE]; SRIRAM SURESH R [US];) 21 February 2013 (2013-02-21) * paragraph [0001] - paragraph [0090]; claims 1-18; examples * ----- | 1-14 | |

TECHNICAL FIELDS SEARCHED (IPC)

The present search report has been drawn up for all claims

1

| Place of search | Date of completion of the search | Examiner |
|---|---|---|
| The Hague | 29 April 2016 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 19 0072

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2016

| Patent document cited in search report | Publication date | Patent family member(s) | Publication date |
|---|---|---|---|
| EP 2738219 A1 | 04-06-2014 | CN 105189654 A | 23-12-2015 |
| | | EP 2738219 A1 | 04-06-2014 |
| | | EP 2943535 A1 | 18-11-2015 |
| | | JP 2016501927 A | 21-01-2016 |
| | | KR 20150082498 A | 15-07-2015 |
| | | US 2015259531 A1 | 17-09-2015 |
| | | WO 2014072447 A1 | 15-05-2014 |
| WO 2014095794 A2 | 26-06-2014 | EP 2931787 A2 | 21-10-2015 |
| | | US 2015322210 A1 | 12-11-2015 |
| | | WO 2014095794 A2 | 26-06-2014 |
| WO 2014072473 A2 | 15-05-2014 | CN 104903383 A | 09-09-2015 |
| | | EP 2917266 A2 | 16-09-2015 |
| | | JP 2015533916 A | 26-11-2015 |
| | | US 2015299395 A1 | 22-10-2015 |
| | | WO 2014072473 A2 | 15-05-2014 |
| WO 2013023997 A1 | 21-02-2013 | EP 2592104 A1 | 15-05-2013 |
| | | EP 2742083 A1 | 18-06-2014 |
| | | US 2014186624 A1 | 03-07-2014 |
| | | WO 2013023997 A1 | 21-02-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014072473 A